# EUROPEAN PATENT SPECIFICATION

(11) **EP 3 239 827 B1**
(45) Date of publication and mention of the grant of the patent: **24.07.2019**
(21) Application number: 17168253.7
(22) Date of filing: 26.04.2017
(51) Int. Cl.: G06F 3/16, G11B 27/00, H04N 21/472, G06F 3/0488, G06F 3/0484, G06F 3/0485

(54) **METHOD AND APPARATUS FOR ADJUSTING PLAYING PROGRESS OF MEDIA FILE**
VERFAHREN UND VORRICHTUNG ZUR EINSTELLUNG DES WIEDERGABEFORTSCHRITTS EINER MEDIENDATEI
PROCÉDÉ ET APPAREIL PERMETTANT DE RÉGLER LA PROGRESSION DE LECTURE D'UN FICHIER MULTIMÉDIA

(30) Priority: 28.04.2016 CN 201610274623
(43) Date of publication of application: 01.11.2017
(73) Proprietor: Beijing Xiaomi Mobile Software Co., Ltd., Beijing 100085 (CN)
(72) Inventor: WANG, Chenxi, Haidian District, Beijing 100085 (CN); LIU, Ming, Haidian District, Beijing 100085 (CN); HAN, Wei, Haidian District, Beijing 100085 (CN)
(74) Representative: Sackin, Robert

(56) References cited:
- EP-A1- 2 690 541
- EP-A2- 2 521 022
- WO-A1-2013/060551
- US-A1- 2007 198 111
- US-A1- 2011 142 428
- US-A1- 2013 298 021
- US-A1- 2013 322 848
- US-A1- 2014 201 633
- US-A1- 2014 325 424

## Description

### TECHNICAL FIELD

The present disclosure generally relates to the technical field of communications, and more particularly, to a method and apparatus for adjusting playing progress of a media file.

### BACKGROUND

In recent years, the rapid development of terminal devices makes types and functions of terminal devices more and more abundant. Taking a smart phone as an example, the user may install a media player software for playing a media file in the smart phone, and may adjust playing progress of the media file. The media file may include: an audio file, or a video file. When adjusting the playing of the media file, it is generally difficult for the user to adjust the playing to desired progress accurately, and an excessive adjustment easily happens.

US patent application with publication No. US 2007/198111 discloses methods and apparatuses for use in navigating through content. Some embodiments provide methods for use in navigating through content that receive an initial first directional control command, activate a seek mode upon receipt of the initial first directional control command comprising advancing over a first amount of content in a first direction from a first point in the content to a second point in the content, receive an initial second directional control command following the receipt of the initial first directional command, and activate a search mode upon receipt of the initial second directional control command, comprising advancing back over a second amount of the first amount of the content where the second amount is less than the first amount of the content

### SUMMARY

In order to overcome the above problems, the present disclosure provides a method and apparatus for adjusting playing progress of a media file.

In particular, the present disclosure is achieved by the following technical solutions.

According to a first aspect of embodiments of the present disclosure, there is provided a method for adjusting playing progress of a media file, including:
acquiring a first operation made by a user with respect to a progress bar of the media file;
judging whether the first operation satisfies a preset operation condition;
when the first operation satisfies the preset operation condition, determining a progress adjusting rule corresponding to the preset operation condition; and
determining a playing progress point of the media file according to the progress adjusting rule and a second operation made by the user with respect to the progress bar of the media file;
receiving a progress adjusting rule setting operation inputted by the user, wherein the progress adjusting rule setting operation carries at least one progress adjusting rule customized by the user; and
storing the progress adjusting rule customized by the user into a terminal device locally,
the judging whether the first operation satisfies the preset operation condition comprises judging whether the first operation is that a dragging rate variation is greater than a preset value during one time of dragging the progress bar, and when the determination result is yes, determining that the first operation satisfies the preset operation condition.

In an unclaimed embodiment, the judging whether the first operation satisfies the preset operation condition includes:
judging whether the first operation is that the progress bar is backward dragged during one time of dragging the progress bar, and when the determination result is yes, determining that the first operation satisfies the preset operation condition; or
judging whether the first operation is that the number of times of consecutive dragging within a preset time period is greater than a threshold value, and when the determination result is yes, determining that the first operation satisfies the preset operation condition.

In an embodiment, the determining the progress adjusting rule corresponding to the preset operation condition includes:
selecting a progress adjusting rule corresponding to the preset operation condition from a plurality of progress adjusting rules stored locally in a terminal device.

In an embodiment, the progress adjusting rules includes:
a proportional relation between a physical dragging distance of the progress bar and a progress adjusting amplitude of the media file, wherein the progress adjusting amplitude of the media file corresponding to a unit physical dragging distance of the progress bar during the first operation is greater than the progress adjusting amplitude of the media file corresponding to a unit physical dragging distance of the progress bar during the second operation.

In an embodiment, the determining the playing progress point of the media file according to the progress adjusting rule and the second operation made by the user with respect to the progress bar of the media file includes:
acquiring a physical dragging distance of the progress bar corresponding to the second operation;
calculating a media file adjusting amplitude corresponding to the second operation according to a proportion between the unit physical dragging distance of the progress bar and the progress adjusting amplitude of the media file recorded in the progress adjusting rule and the physical dragging distance of the progress bar corresponding to the second operation; and
determining the playing progress point of the media file according to the media file adjusting amplitude corresponding to the second operation and a playing progress point of the media file which is before the second operation made by the user.

In an embodiment, the method further includes:
when the first operation satisfies the preset operation condition, enlargedly presenting the progress bar of the media file within a first progress range according to a preset presenting parameter, wherein a termination position of the first operation is located within the first progress range.

In an embodiment, the method further includes:
receiving a progress adjusting rule modifying operation inputted by the user, wherein the progress adjusting rule modifying operation carries a modification parameter for modifying by the user at least one progress adjusting rule stored locally in a terminal device; and
updating the progress adjusting rule stored locally in the terminal device according to the modification parameter.

According to a second aspect of the embodiments of the present disclosure, there is provided an apparatus for adjusting playing progress of a media file, including:
an acquisition module configured to acquire a first operation made by a user with respect to a progress bar of the media file;
a judgment module configured to judge whether the first operation acquired by the acquisition module satisfies a preset operation condition;
a first determination module configured to, in case that the judgment result of the judgment module is yes, determine a progress adjusting rule corresponding to the preset operation condition; and
a second determination module configured to determine a playing progress point of the media file according to the progress adjusting rule determined by the first determination module and a second operation made by the user with respect to the progress bar of the media file.

In an unclaimed embodiment, the judgment module includes:
a first judgment submodule configured to judge whether the first operation acquired by the acquisition module is that the progress bar is backward dragged during one time of dragging the progress bar, and when the determination result is yes, determine that the first operation satisfies the preset operation condition; or
a second judgment submodule configured to judge whether the first operation acquired by the acquisition module is that a dragging rate variation is greater than a preset value during one time of dragging the progress bar, and when the determination result is yes, determine that the first operation satisfies the preset operation condition; or
a third judgment submodule configured to judge whether the first operation acquired by the acquisition module is that the number of times of consecutive dragging within a preset time period is greater than a threshold value, and when the determination result is yes, determine that the first operation satisfies the preset operation condition.

In an embodiment, the first determination module includes:
a rule determination submodule configured to select a progress adjusting rule corresponding to the preset operation condition from a plurality of progress adjusting rules stored locally in a terminal device.

In an embodiment, the progress adjusting rule includes:
a proportional relation between a physical dragging distance of the progress bar and a progress adjusting amplitude of the media file, wherein the progress adjusting amplitude of the media file corresponding to a unit physical dragging distance of the progress bar during the first operation is greater than the progress adjusting amplitude of the media file corresponding to a unit physical dragging distance of the progress bar during the second operation.

In an embodiment, the second determination module includes:
a distance acquisition submodule configured to acquire a physical dragging distance of the progress bar corresponding to the second operation;
a calculation submodule configured to calculate a media file adjusting amplitude corresponding to the second operation according to a proportion between the unit physical dragging distance of the progress bar and the progress adjusting amplitude of the media file recorded in the progress adjusting rule and the physical dragging distance of the progress bar corresponding to the second operation; and
a progress point determination submodule configured to determine the playing progress point of the media file according to the media file adjusting amplitude corresponding to the second operation and a playing progress point of the media file before the second operation made by the user.

In an embodiment, the apparatus further includes:
a progress bar presenting module configured to, when the judgment result of the judgment module is yes, enlargedly present the progress bar of the media file within a first progress range according to a preset presenting parameter, wherein a termination position of the first operation is located within the first progress range.

In an embodiment, the apparatus further includes:
a first operation receiving module configured to receive a progress adjusting rule setting operation inputted by the user, wherein the progress adjusting rule setting operation carries at least one progress adjusting rule customized by the user; and
a rule storing module configured to store the progress adjusting rule customized by the user into a terminal device locally.

In an unclaimed embodiment, the apparatus further includes:
a second operation receiving module configured to receive a progress adjusting rule modifying operation inputted by the user, wherein the progress adjusting rule modifying operation carries a modification parameter for modifying by the user at least one progress adjusting rule stored locally in a terminal device; and
a rule updating module configured to update the progress adjusting rule stored locally in the terminal device according to the modification parameter.

According to a third aspect of the embodiments of the present disclosure, there is provided an apparatus for adjusting playing progress of a media file, including:
a processor; and
a memory for storing instructions executable by the processor;
wherein the processor is configured to:
acquire a first operation made by a user with respect to a progress bar of the media file;
judge whether the first operation satisfies a preset operation condition;
when the first operation satisfies the preset operation condition, determine a progress adjusting rule corresponding to the preset operation condition; and
determine a playing progress point of the media file according to the progress adjusting rule and a second operation made by the user with respect to the progress bar of the media file.

In the embodiments of the present disclosure, a corresponding progress adjusting rule may be selected according to the operation type of the user, the progress can be accurately adjusted to a playing progress point desired by the user, and an excessive adjustment can be avoided.

In the embodiments of the present disclosure, a dragging intention of the user during dragging the progress bar may be recognized, and based on the dragging intention of the user, the media file adjusting amplitude corresponding to the physical dragging distance is adaptively adjusted, in this way, the progress may be accurately adjusted to a desired progress, and an excessive adjustment is avoided.

In the embodiments of the present disclosure, the presenting parameter of the progress bar of the media file may be automatically adjusted according to the gesture operation intention of the user, and the progress bar is adjusted to a size suitable for the user's operation and then is presented, in this way, it is facilitated for the user to quickly and accurately adjust the playing progress of the media file.

In the embodiments of the present disclosure, an interface for setting the progress adjusting rule may be provided for the user, in this way, the requirement of the user for customizing the progress adjusting rule may be satisfied, and on the other hand, a calculation rule which is more matched with the dragging operation may be provided, so as to improve the accuracy of the adjusting result.

The present invention also provides a computer program, which when executing on a processor of a terminal device, performs the above method.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for adjusting playing progress of a media file, according to an exemplary embodiment of the present disclosure.
Fig. 2 is an application scenario view illustrating a method for adjusting playing progress of a media file, according to an exemplary embodiment of the present disclosure.
Fig. 3 is an application scenario view illustrating another method for adjusting playing progress of a media file, according to an exemplary embodiment of the present disclosure.
Fig. 4 is a flow chart of one implementation manner of step 104 in the embodiment shown in Fig. 1, according to an exemplary embodiment of the present disclosure.
Fig. 5 is a block diagram illustrating an apparatus for adjusting playing progress of a media file, according to an exemplary embodiment of the present disclosure.
Fig. 6 is a block diagram illustrating another apparatus for adjusting playing progress of a media file, according to an exemplary embodiment of the present disclosure.
Fig. 7 is a block diagram illustrating another apparatus for adjusting playing progress of a media file, according to an exemplary embodiment of the present disclosure.
Fig. 8 is a block diagram illustrating another apparatus for adjusting playing progress of a media file, according to an exemplary embodiment of the present disclosure.
Fig. 9 is a block diagram illustrating another apparatus for adjusting playing progress of a media file, according to an exemplary embodiment of the present disclosure.
Fig. 10 is a block diagram illustrating another apparatus for adjusting playing progress of a media file, according to an exemplary embodiment of the present disclosure.
Fig. 11 is a block diagram illustrating another apparatus for adjusting playing progress of a media file, according to an exemplary embodiment of the present disclosure.
Fig. 12 is a structural diagram illustrating an apparatus for adjusting playing progress of a media file, according to an exemplary embodiment of the present disclosure.

### DETAILED DESCRIPTION

In recent years, the rapid development of the terminal technique makes types and functions of terminal devices more and more abundant. Taking a smart phone as an example, the user may install a media player software for playing a media file in the smart phone, and may adjust playing progress of the media file. The media file may include: an audio file, or a video file. When adjusting the playing of the media file, it is generally difficult for the user to adjust the playing to desired progress accurately, and an excessive adjustment is easily to be occurred. In order to solve the above problems, the present disclosure provides a method and apparatus for adjusting playing progress of a media file.

Hereinafter, the method for adjusting playing progress of a media file provided by the present disclosure will be introduced at first.

It should be noted, the method provided by the present disclosure is applicable to a terminal device. In actual applications, the terminal device may include: a smart phone, a tablet computer, and the like, which is not limited by the present disclosure.

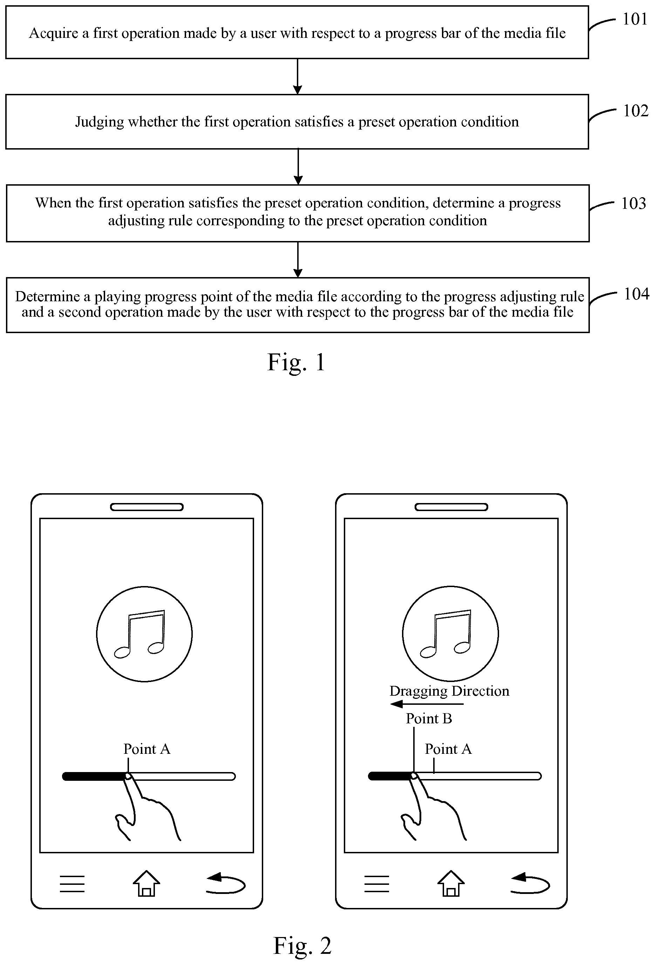

Fig. 1 is a flow chart showing a method for adjusting playing progress of a media file, according to an exemplary embodiment of the present disclosure. As shown in Fig. 1, the method may include the following steps.

In step 101, a first operation made by a user with respect to a progress bar of the media file is acquired.

The media file in the present embodiment may include: a video file, and an audio file. The user may perform a variety of operations on a progress bar of the video file or the audio file, such as a quick dragging, a slow dragging, a forward dragging, or a backward dragging.

The progress bar in the present embodiment may be a sliding block for adjusting playing progress of the media file. In actual applications, the sliding block may be located at an arbitrary position of a graphical user interface displayed by the mobile terminal.

The first operation in the present embodiment may be a non-touch operation, for example, a user clicks and drags the progress bar; or the first operation may be a touch operation, such as a gesture of dragging the progress bar. When the first operation is the touch operation, the mobile terminal may first recognize whether the gesture of the user is a gesture of dragging the progress bar, if yes, then the mobile terminal further recognizes a type of the gesture of dragging the progress bar by the user, for example, recognizes whether the dragging gesture by the user is a quick dragging, a slow dragging, a forward dragging, a backward dragging, or the like.

In step 102, it is judged whether the first operation satisfies a preset operation condition.

In the present embodiment, the operation satisfying the preset operation condition may be interpreted as an operation which can reflect that the user is going to drag the progress bar to a target progress point during dragging the progress bar. For example, with respect to the condition in which the adjusting amplitude is too large, when the user is dragging the progress bar, he/she may drag back the progress bar inversely; and with respect to the condition that the progress bar will arrive at the target progress point soon, when the user is dragging the progress bar, he/she may generally slow down the speed of dragging the progress bar.

In a possible implementation manner, the step 102 may include:
judging whether the first operation is that the progress bar is backward dragged during one time of dragging the progress bar, and if yes, determining that the first operation satisfies the preset operation condition.

Illustratively, in the scene of dragging the progress bar of the audio file by the user shown in Fig. 2, the user drags the progress bar for one time to a point A, and then drags the progress bar backward to a point B without releasing the progress bar at the point A.

In another possible implementation manner, the step 102 may include:
judging whether the first operation is that a dragging rate variation is greater than a preset value during one time of dragging the progress bar, and if yes, determining that the first operation satisfies the preset operation condition.

In the present embodiment, a rate changing scene corresponding to the dragging rate variation may include: the rate from quick to low, or may include: the rate from low to quick.

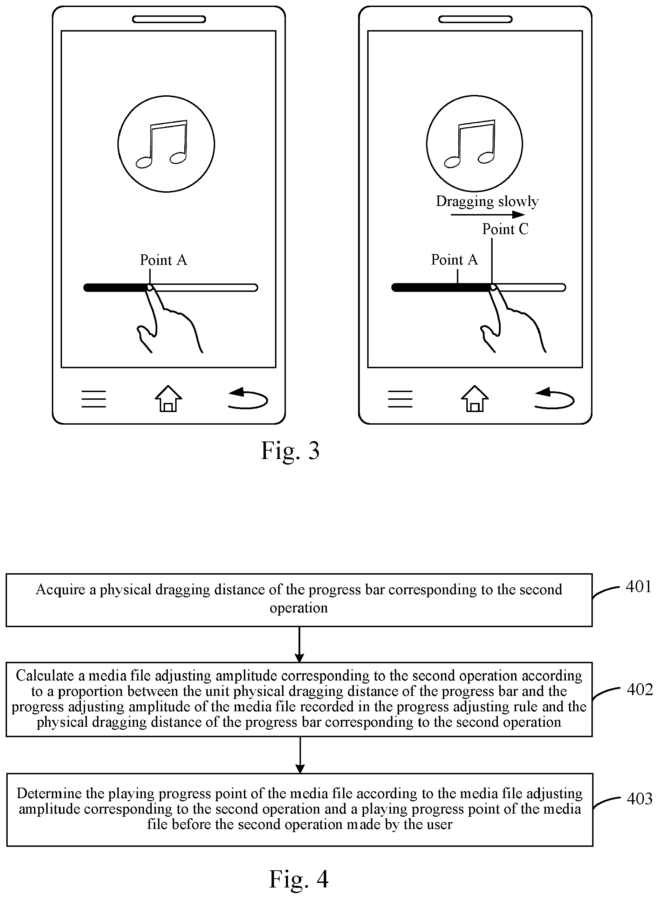

Illustratively, in the scene of dragging the progress bar of the audio file by the user shown in Fig. 3, the user drags the progress bar for one time to a point A, and then slowly drags the progress bar in the same direction to a point C without releasing the progress bar at the point A.

It should be appreciated that when the user desires to accurately adjust the playing progress of the media file, sometimes, the user may continuously drag the progress bar for several times. Correspondingly, in another possible implementation manner, the step 102 may include:
judging whether the first operation is that the number of times of consecutive dragging within a preset time period is greater than a threshold value, and if yes, determining that the first operation satisfies the preset operation condition.

In step 103, when the first operation satisfies the preset operation condition, a progress adjusting rule corresponding to the preset operation condition is determined.

In a possible implementation manner, the terminal device in the present implementation manner may pre-store a plurality sets of progress adjusting rules, and each set of the progress adjusting rules corresponds to one type of operation condition, so as to ensure that the adjusting amplitude of the media file may be accurately calculated with respect to different types of operation conditions. At this time, the above step 103 may include:
selecting a progress adjusting rule corresponding to the preset operation condition from a plurality sets of progress adjusting rules stored locally in a terminal device.

In step 104, a playing progress point of the media file is determined according to the progress adjusting rule and a second operation made by the user with respect to the progress bar of the media file.

In the present embodiment, the second operation is an operation that the user continues to drag the progress bar after the first operation is completed. From the view of the progress bar, the playing progress point in the present embodiment is a position to which the sliding block in the progress bar slides currently. From the view of the playing of the media file, the playing progress point in the present embodiment is the time point of the media file currently plays. The first and second operations in the present embodiment constitute a whole dragging operation of the user. After the dragging operation is completely performed by the user, the playing progress point after the above whole dragging operation is calculated according to the progress adjusting rule determined in the step 103 and a playing progress point which is before the above whole dragging operation.

In addition, after the end of the second operation, the progress adjusting rule may be restored to a default state, i.e., when a normal dragging is occurred again, the playing progress of the media file is adjusted according to the default adjusting rule.

From the above embodiments, it can be seen that in the present embodiment, a corresponding progress adjusting rule may be selected according to the operation type of the user, the progress can be accurately adjusted to a playing progress point desired by the user, so that an excessive adjustment can be avoided.

In another embodiment provided by the present disclosure, the above progress adjusting rule may include:
a proportional relation between a physical dragging distance of the progress bar and a progress adjusting amplitude of the media file, wherein the progress adjusting amplitude of the media file corresponding to a unit physical dragging distance of the progress bar during the first operation is greater than the progress adjusting amplitude of the media file corresponding to a unit physical dragging distance of the progress bar during the second operation.

Illustratively, the progress adjusting amplitude of the media file corresponding to the unit physical dragging distance of the progress bar during the first operation is: dragging 1mm corresponds to skipping over 60 seconds of the audio, and the progress adjusting amplitude of the media file corresponding to the unit physical dragging distance of the progress bar during the second operation is: dragging 1mm corresponds to skipping over 10 seconds of the audio.

For example, when a smart phone is playing an audio file (such as, an Audio.mp3 file), when the user presses and drags the progress bar of the audio file, taking a Xiaomi 1 phone as an example, during a procedure from starting to drag the progress bar to completing one dragging and pressing the progress bar by the user, every time the progress bar is dragged in a direction by 1mm with a finger of the user pressing the progress bar, the audio skips over 60 seconds, however, when the user accomplishes one dragging and then drags the progress bar in a reverse direction or slows down the dragging speed without releasing his/her hand, an audio adjusting amplitude corresponding to dragging a unit distance becomes small. For example, in the above circumstance, during a procedure after the dragging is completed and the hand is not released, every time the progress bar is dragged by 1mm along a direction, the audio skips over 10 seconds.

Based on the previous embodiment, as shown in Fig. 4, in another embodiment provided by the present disclosure, the above step 104 may include the following steps.

In step 401, a physical dragging distance of the progress bar corresponding to the second operation is acquired.

For example, during the procedure from starting to drag the progress bar to completing one dragging and pressing the progress bar by the user, the sliding physical distance of the progress bar is 2mm, and then the progress bar is dragged inversely by 1mm.

For another example, during the procedure from starting to drag the progress bar to completing one dragging and pressing the progress bar by the user, the sliding physical distance of the progress bar is 2mm, and then the progress bar is dragged in the same direction slowly by 1mm. In both the above examples, the physical dragging distance of the progress bar corresponding to the second operation is 1mm.

In step 402, a media file adjusting amplitude corresponding to the second operation is calculated according to a proportion between the unit physical dragging distance of the progress bar and the progress adjusting amplitude of the media file recorded in the progress adjusting rule and the physical dragging distance of the progress bar corresponding to the second operation.

Assuming that during the second operation, every time the progress bar is dragged in a direction by 1mm, the audio skips over 10 seconds; and every time the user drags the progress bar in the same direction slowly or drags the progress bar reversely by 1mm, the adjusting amplitude of the audio file is 10 seconds/mm^{∗}1mm=10 seconds.

In step 403, the playing progress point of the media file is determined according to the media file adjusting amplitude corresponding to the second operation and a playing progress point of the media file which is before the second operation made by the user.

Assuming that the playing progress point of the audio file before the above first operation made by the user is 1 minute and 20 seconds, during the first operation, every time the progress bar is dragged in a direction by 1mm, the audio skips over 60 seconds. During the procedure from starting to drag the progress bar to completing one dragging and pressing the progress bar by the user, the sliding physical distance of the progress bar is 2mm, then the adjusting amplitude of the audio file is 60 seconds/mm^{∗}2mm=120 seconds. Accordingly, the playing progress point of the above audio file after the above first operation made by the user is 3 minutes and 20 seconds.

At this time, with respect to an instance that the progress bar is reversely dragged by 1mm, the playing progress point of the above media file after the second operation made by the user is: 3 minutes and 20 seconds - 10 seconds =3 minutes and 10 seconds; and with respect to an instance that the progress bar is slowly dragged in the same direction by 1mm, the playing progress point of the above media file after the second operation made by the user is: 3 minutes and 20 seconds + 10 seconds =3 minutes and 30 seconds.

From the above embodiments, it can be seen that in the present embodiment, the dragging intention of the user during dragging the progress bar can be recognized, and based on the dragging intention of the user, the media file adjusting amplitude corresponding to the physical dragging distance is adaptively adjusted, in this way, the progress can be accurately adjusted to desired progress, so that an excessive adjustment can be avoided.

For making the adjustment more accurate, in another embodiment provided by the present disclosure, on the basis of the embodiment shown in Fig. 1, the following steps may be added into the method for adjusting playing progress of a media file provided by the present embodiment.

When the above first operation satisfies the preset operation condition, the progress bar of the media file within a first progress range is enlargedly shown according to a preset presenting parameter, wherein a termination position of the first operation is located within the first progress range.

It can be appreciated that during dragging the progress bar by the user, when the progress bar is nearly dragged to the target progress point or the progress bar is slightly over-adjusted, the user generally pauses the dragging operation, and then slows down the dragging of the progress bar or reversely drags the progress bar. In addition, partially enlarging and then presenting the progress bar of the media file also facilitates the user to accurately adjust the progress bar. For this, the progress bar near the pausing position on the progress bar may be enlargely shown.

It should be noted, the first progress range in the present embodiment may be 10mm, or may be set according to actual needs, which is not limited by the present embodiment.

For example, the first progress range is 10mm, in actual applications, a progress bar within 10mm on the left of the termination position of the first operation may be enlargely presented; or a progress bar within 10mm on the right of the termination position of the first operation may be enlargely presented; or a progress bar within Xmm on the right of the termination position of the first operation may be enlargely presented and a progress bar within Ymm on the right of the termination position of the first operation may be enlargely presented, wherein X+Y=10.

From the above embodiments, it can be seen that in the present embodiment, the presenting parameter of the progress bar of the media file may be automatically adjusted according to the gesture operation intention of the user, and the progress bar is adjusted to a size suitable for the user's operation and then is presented, in this way, it is convenient for the user to quickly and accurately adjust the playing progress of the media file.

Considering the diversity of the dragging operations and the requirements of the user for setting the progress adjusting rule on his/her own will, the technical solution of the present disclosure may provide the user with an interface for setting the progress adjusting rule. In one possible embodiment, on the basis of the embodiment shown in Fig. 1, the following step may be added into the method for adjusting playing progress of a media file provided by the present embodiment.

A progress adjusting rule setting operation inputted by the user is received, wherein the progress adjusting rule setting operation carries at least one progress adjusting rule customized by the user; and the progress adjusting rule customized by the user is stored into the terminal device locally.

In another embodiment provided by the present disclosure, on the basis of the embodiment shown in Fig. 1, the following step may be added into the method for adjusting playing progress of a media file provided by the present embodiment.

A progress adjusting rule modifying operation inputted by the user is received, wherein the progress adjusting rule modifying operation carries a modification parameter for modifying by the user at least one progress adjusting rule stored locally in the terminal device; and the progress adjusting rule stored locally in the terminal device is updated according to the modification parameter.

From the above embodiments, it can be seen that in the present embodiment, an interface for setting the progress adjusting rule may be provided for the user, in this way, the requirement of the user for customizing the progress adjusting rule may be satisfied, and on the other hand, a calculation rule which is more matched with the dragging operation may be provided, thereby improving the accuracy of the adjusting result.

It should be noted, although the operations of the method of the present disclosure are described in a specific order in the drawings, it is not required or implies that these operations must be performed in the specific order, or the desired result can be only achieved by performing all the illustrated operations. On the contrary, the executing sequence of the steps depicted in the flow chart may be changed. Additionally or alternatively, some steps may be omitted, several steps may be combined into one step to be performed, and/or one step may be divided into multiple steps to be performed.

Corresponding to the above embodiments of the method for adjusting playing progress of a media file, the present disclosure also provides embodiments of an apparatus for adjusting playing progress of a media file.

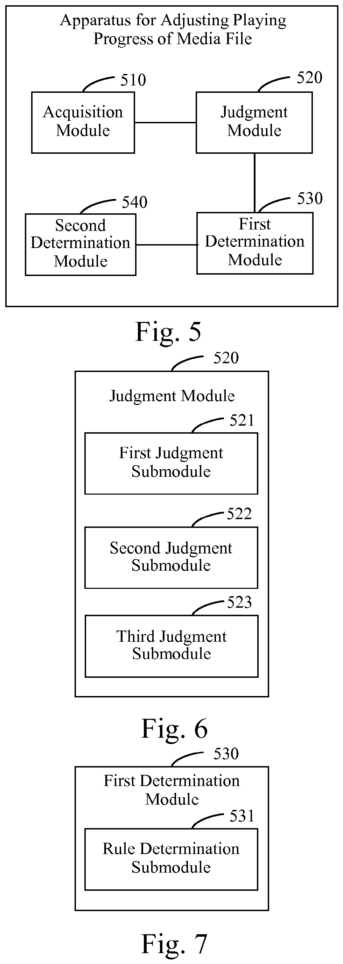

Fig. 5 is a block diagram illustrating an apparatus for adjusting playing progress of a media file, according to an exemplary embodiment of the present disclosure. As shown in Fig. 5, the apparatus may include: an acquisition module 510, a judgment module 520, a first determination module 530, and a second determination module 540.

The acquisition module 510 is configured to acquire a first operation made by a user with respect to a progress bar of the media file.

The judgment module 520 is configured to determine whether the first operation acquired by the acquisition module satisfies a preset operation condition.

The first determination module 530 is configured to, in case that the judgment result of the judgment module 520 is yes, determine a progress adjusting rule corresponding to the preset operation condition.

The second determination module 540 is configured to determine a playing progress point of the media file according to the progress adjusting rule determined by the first determination module and a second operation made by the user with respect to the progress bar of the media file.

From the above embodiments, it can be seen that in the present embodiment, a corresponding progress adjusting rule may be selected according to the operation type of the user, the progress can be accurately adjusted to a playing progress point desired by the user, and an excessive adjustment can be avoided.

Fig. 6 is a block diagram illustrating another apparatus for adjusting playing progress of a media file, according to an exemplary embodiment of the present disclosure. As shown in Fig. 6, on the basis of the embodiment shown in Fig. 5, in the present embodiment, the judgment module 520 may include: a first judgment submodule 521, a second judgment submodule 522, and a third judgment submodule 523.

The first judgment submodule 521 is configured to judge whether the first operation acquired by the acquisition module is that the progress bar is backward dragged during one time of dragging the progress bar, and when the determination result is yes, determine that the first operation satisfies the preset operation condition.

The second judgment submodule 522 is configured to judge whether the first operation acquired by the acquisition module is that a dragging rate variation is greater than a preset value during one time of dragging the progress bar, and when the determination result is yes, determine that the first operation satisfies the preset operation condition.

The third judgement submodule 523 is configured to judge whether the first operation acquired by the acquisition module is that a number of times of consecutive dragging within a preset time period is greater than a threshold value, and when the determination result is yes, determine that the first operation satisfies the preset operation condition.

Fig. 7 is a block diagram illustrating another apparatus for adjusting playing progress of a media file, according to an exemplary embodiment of the present disclosure. As shown in Fig. 7, on the basis of the embodiment shown in Fig. 5 or Fig. 6, in the present embodiment, the first determination module 530 may include: a rule determination submodule 531.

The rule determination submodule 531 is configured to select a progress adjusting rule corresponding to the preset operation condition from a plurality of progress adjusting rules stored locally in a terminal device.

In another embodiment provided by the present disclosure, this embodiment may be in any embodiment shown in Figs 5-7, the progress adjusting rule may include:
a proportional relation between a physical dragging distance of the progress bar and a progress adjusting amplitude of the media file, wherein the progress adjusting amplitude of the media file corresponding to a unit physical dragging distance of the progress bar during the first operation is greater than the progress adjusting amplitude of the media file corresponding to a unit physical dragging distance of the progress bar during the second operation.

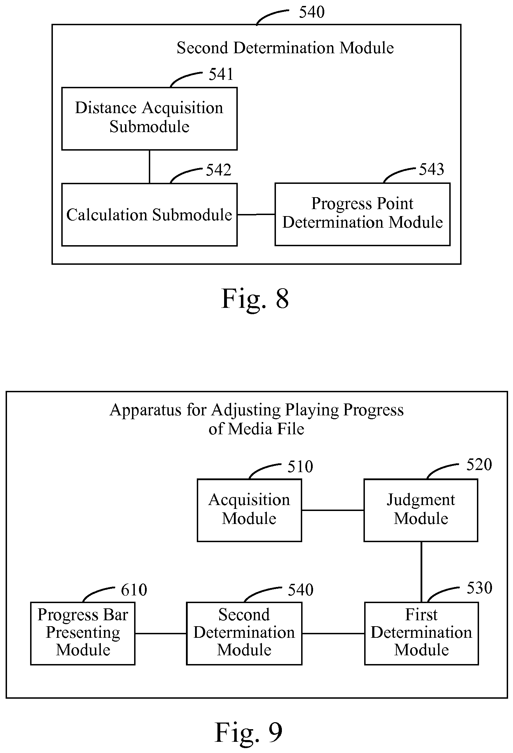

Fig. 8 is a block diagram illustrating another apparatus for adjusting playing progress of a media file, according to an exemplary embodiment of the present disclosure. As shown in Fig. 8, on the basis of the previous embodiment of the apparatus, in the present embodiment, the second determination module 540 may include: a distance acquisition submodule 541, a calculation submodule 542, and a progress point determination submodule 543.

The distance acquisition submodule 541 is configured to acquire a physical dragging distance of the progress bar corresponding to the second operation.

The calculation submodule 542 is configured to calculate a media file adjusting amplitude corresponding to the second operation according to a proportion between the unit physical dragging distance of the progress bar and the progress adjusting amplitude of the media file recorded in the progress adjusting rule and the physical dragging distance of the progress bar corresponding to the second operation.

The progress point determination submodule 543 is configured to determine the playing progress point of the media file according to the media file adjusting amplitude corresponding to the second operation and a playing progress point of the media file before the second operation made by the user.

Fig. 9 is a block diagram illustrating another apparatus for adjusting playing progress of a media file, according to an exemplary embodiment of the present disclosure. As shown in Fig. 9, on the basis of the previous embodiment of the apparatus, in the present embodiment, the apparatus may further include: a progress bar presenting module 610.

The progress bar presenting module 610 is configured to, when the judgment result of the judgment module 520 is yes, enlargedly presenting the progress bar of the media file within a first progress range according to a preset presenting parameter, wherein the termination position of the first operation is located within the first progress range.

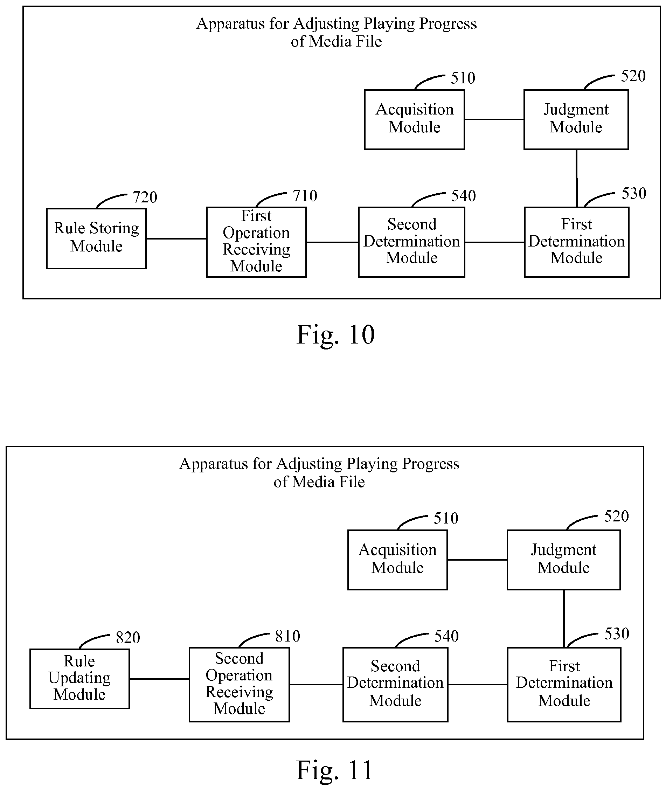

Fig. 10 is a block diagram illustrating another apparatus for adjusting playing progress of a media file, according to an exemplary embodiment of the present disclosure. As shown in Fig. 10, on the basis of the previous embodiment of the apparatus, in the present embodiment, the apparatus may further include: a first operation receiving module 710, and a rule storing module 720.

The first operation receiving module 710 is configured to receive a progress adjusting rule setting operation inputted by the user, wherein the progress adjusting rule setting operation carries at least one progress adjusting rule customized by the user; and the rule storing module 720 is configured to store the progress adjusting rule customized by the user into the terminal device locally.

Fig. 11 is a block diagram illustrating another apparatus for adjusting playing progress of a media file, according to an exemplary embodiment of the present disclosure. As shown in Fig. 11, on the basis of the previous embodiment of the apparatus, in the present embodiment, the apparatus may further include: a second operation receiving module 810, and a rule updating module 820.

The second operation receiving module 810 is configured to receive a progress adjusting rule modifying operation inputted by the user, wherein the progress adjusting rule modifying operation carries a modification parameter for modifying by the user at least one progress adjusting rule stored locally in the terminal device.

The rule updating module 820 is configured to update the progress adjusting rule stored locally in the terminal device according to the modification parameter.

With respect to the apparatus in the above embodiments, the specific manners for performing operations for individual modules therein have been described in detail in the embodiments regarding the methods, which will not be elaborated herein.

For device embodiments, since they are substantially corresponding to the method embodiments, the relevant contents may be referred to some explanations in the method embodiments. The above-described device embodiments are only illustrative. The units illustrated as separate components may be or may not be separated physically, the component illustrated as a unit may be or may not be a physical unit, i.e., may be located at one location, or may be distributed into multiple network units. A part or all of the modules may be selected to achieve the purpose of the solution in the present disclosure according to actual requirements. The person skilled in the art can understand and implement the present disclosure without paying inventive labor.

Correspondingly, the present disclosure also provides an apparatus for adjusting playing progress of a media file, including: a processor; and a memory for storing instructions executable by the processor; wherein the processor is configured to: acquire a first operation made by a user with respect to a progress bar of the media file; judge whether the first operation satisfies a preset operation condition; when the first operation satisfies the preset operation condition, determine a progress adjusting rule corresponding to the preset operation condition; and determine a playing progress point of the media file according to the progress adjusting rule and a second operation made by the user with respect to the progress bar of the media file.

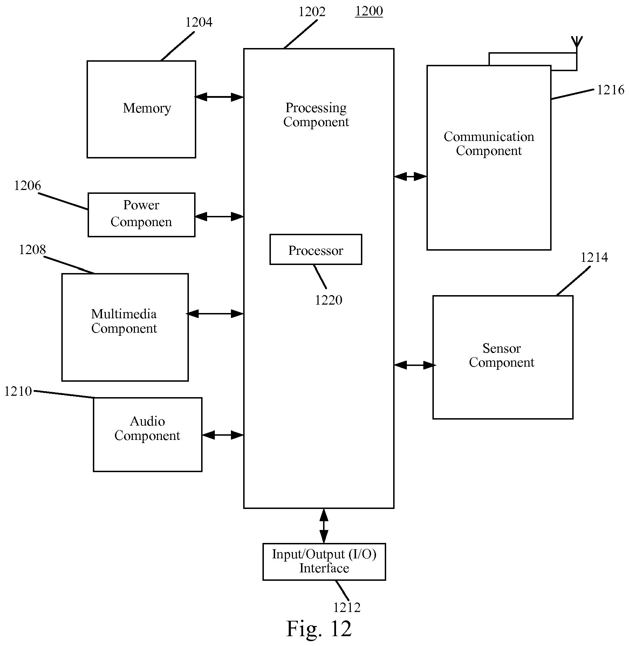

Fig. 12 is a structural diagram illustrating an apparatus 1200 for adjusting playing progress of a media file, according to an exemplary embodiment of the present disclosure. As shown in Fig. 12, for example, the device 1200 may be a mobile phone, a computer, a digital broadcast terminal, a messaging device, a gaming console, a tablet, a medical device, exercise equipment, a personal digital assistant, an aircraft, and the like.

Referring to Fig. 12, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any applications or methods operated on the apparatus 1200, contact data, phonebook data, messages, pictures, videos, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power management system, one or more power sources, and any other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a loudspeaker used to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the apparatus 1200 and other devices. The apparatus 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the apparatus 1200, for performing the above-described methods. For example, the non-transitory computer-readable storage medium may be a ROM, a RAM, a CD-ROM, a magnetic tape, a floppy disc, an optical data storage device, and the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A method for adjusting playing progress of a media file, comprising:
receiving a progress adjusting rule setting operation inputted by the user, wherein the progress adjusting rule setting operation carries at least one progress adjusting rule customized by the user;
storing the progress adjusting rule customized by the user into a terminal device locally;
acquiring (101) a first operation made by a user with respect to a progress bar of the media file;
judging (102) whether the first operation satisfies a preset operation condition, the judging comprising determining whether the first operation is an operation whereby the user drags the progress bar to a first point and then slowly drags the progress bar in the same direction without releasing the progress bar at the first point;
when the first operation satisfies the preset operation condition, determining (103) a progress adjusting rule corresponding to the preset operation condition; and
determining (104) a playing progress point of the media file according to the progress adjusting rule and a second operation made by the user with respect to the progress bar of the media file, the second operation comprising the user dragging the progress bar in the same direction from the first point to a second point.

2. The method of claim 1, wherein the determining (103) the progress adjusting rule corresponding to the preset operation condition comprises:
selecting a progress adjusting rule corresponding to the preset operation condition from a plurality of progress adjusting rules stored locally in a terminal device.

3. The method of claim 1, wherein the progress adjusting rule comprises:
a proportional relation between a physical dragging distance of the progress bar and a progress adjusting amplitude of the media file, wherein the progress adjusting amplitude of the media file corresponding to a unit physical dragging distance of the progress bar during the first operation is greater than the progress adjusting amplitude of the media file corresponding to a unit physical dragging distance of the progress bar during the second operation.

4. The method of claim 3, wherein the determining (104) the playing progress point of the media file according to the progress adjusting rule and the second operation made by the user with respect to the progress bar of the media file comprises:
acquiring (401) a physical dragging distance of the progress bar corresponding to the second operation;
calculating (402) a media file adjusting amplitude corresponding to the second operation according to a proportion between the unit physical dragging distance of the progress bar and the progress adjusting amplitude of the media file recorded in the progress adjusting rule and the physical dragging distance of the progress bar corresponding to the second operation; and
determining (403) the playing progress point of the media file according to the media file adjusting amplitude corresponding to the second operation and a playing progress point of the media file before the second operation made by the user.

5. The method of any preceding claim, further comprising:
when the first operation satisfies the preset operation condition, enlargedly presenting the progress bar of the media file within a first progress range according to a preset presenting parameter, wherein a termination position of the first operation is located within the first progress range.

6. The method of any preceding claim, further comprising:
receiving a progress adjusting rule modifying operation inputted by the user, wherein the progress adjusting rule modifying operation carries a modification parameter for modifying by the user at least one progress adjusting rule stored locally in a terminal device; and
updating the progress adjusting rule stored locally in the terminal device according to the modification parameter.

7. An apparatus (1200) for adjusting playing progress of a media file, comprising:
an acquisition module (510) configured to acquire a first operation made by a user with respect to a progress bar of the media file;
a judgment module (520) configured to judge whether the first operation acquired by the acquisition module satisfies a preset operation condition, the judging comprising determining whether the first operation is an operation whereby the user drags the progress bar to a first point and then slowly drags the progress bar in the same direction without releasing the progress bar at the first point;
a first determination module (530) configured to, in case that the judgment result of the judgment module (520) is yes, determine a progress adjusting rule corresponding to the preset operation condition; and
a second determination module (540) configured to determine a playing progress point of the media file according to the progress adjusting rule determined by the first determination module (530) and a second operation made by the user with respect to the progress bar of the media file, the second operation comprising the user dragging the progress bar in the same direction from the first point to a second point;
a first operation receiving module (710) configured to receive a progress adjusting rule setting operation inputted by the user, wherein the progress adjusting rule setting operation carries at least one progress adjusting rule customized by the user; and
a rule storing module (720) configured to store the progress adjusting rule customized by the user into a terminal device locally.

8. The apparatus of claim 7, wherein the first determination module (530) comprises:
a rule determination submodule (531) configured to select a progress adjusting rule corresponding to the preset operation condition from a plurality of progress adjusting rules stored locally in a terminal device.

9. The apparatus of claim 7 or claim 8, wherein the progress adjusting rule comprises:
a proportional relation between a physical dragging distance of the progress bar and a progress adjusting amplitude of the media file, wherein the progress adjusting amplitude of the media file corresponding to a unit physical dragging distance of the progress bar during the first operation is greater than the progress adjusting amplitude of the media file corresponding to a unit physical dragging distance of the progress bar during the second operation.

10. The apparatus of any of claims 7 to 9, wherein the second determination module (540) comprises:
a distance acquisition submodule (541) configured to acquire a physical dragging distance of the progress bar corresponding to the second operation;
a calculation submodule (542) configured to calculate a media file adjusting amplitude corresponding to the second operation according to a proportion between the unit physical dragging distance of the progress bar and the progress adjusting amplitude of the media file recorded in the progress adjusting rule and the physical dragging distance of the progress bar corresponding to the second operation; and
a progress point determination submodule (543) configured to determine the playing progress point of the media file according to the media file adjusting amplitude corresponding to the second operation and a playing progress point of the media file before the second operation made by the user.

11. The apparatus of any of claims 7 to 10, further comprising:
a progress bar presenting module (610) configured to, when the judgment result of the judgment module is yes, enlargedly present the progress bar of the media file within a first progress range according to a preset presenting parameter, wherein a termination position of the first operation is located within the first progress range.

12. A computer program comprising instructions which, when executed by a processor of a terminal device, cause the processor to perform a method according to any of claims 1 to 6.

## Patentansprüche

1. Verfahren zum Anpassen des Wiedergabefortschritts einer Mediendatei, das Folgendes aufweist:
Empfangen einer durch den Benutzer eingegebenen Fortschrittsanpassungsregel-Einstellhandlung, wobei die Fortschrittsanpassungsregel-Einstellhandlung wenigstens eine durch den Benutzer angepasste Fortschrittsanpassungsregel trägt;
lokales Einspeichern der Fortschrittsanpassungsregel, die durch den Benutzer angepasst wurde, in ein Endgerät;
Erfassen (101) einer ersten, von einem Benutzer in Bezug auf einen Fortschrittsbalken der Mediendatei getätigten Handlung;
Urteilen (102), ob die erste Handlung eine vorgegebene Handlungsbedingung erfüllt, wobei das Urteilen das Bestimmen aufweist, ob die erste Handlung eine Handlung ist, bei der der Benutzer den Fortschrittsbalken zu einem ersten Punkt zieht und dann den Fortschrittsbalken langsam in der gleichen Richtung zieht, ohne den Fortschrittsbalken am ersten Punkt loszulassen;
wenn die erste Handlung die vorgegebene Handlungsbedingung erfüllt, Bestimmen (103) einer Fortschrittsanpassungsregel, die der vorgegebenen Handlungsbedingung entspricht; und
Bestimmen (104) eines Wiedergabefortschrittspunkts der Mediendatei gemäß der Fortschrittsanpassungsregel und einer durch den Benutzer getätigten zweiten Handlung in Bezug auf den Fortschrittsbalken der Mediendatei, wobei die zweite Handlung das Ziehen des Fortschrittsbalkens durch den Benutzer in der gleichen Richtung vom ersten Punkt zu einem zweiten Punkt aufweist.

2. Verfahren nach Anspruch 1, wobei das Bestimmen (103) der Fortschrittsanpassungsregel, die der vorgegebenen Handlungsbedingung entspricht, Folgendes aufweist:
Auswählen einer Fortschrittsanpassungsregel, die der vorgegebenen Handlungsregel entspricht, aus mehreren Fortschrittsanpassungsregeln, die lokal in einem Endgerät gespeichert werden.

3. Verfahren nach Anspruch 1, wobei die Fortschrittsanpassungsregel Folgendes aufweist:
eine proportionale Beziehung zwischen einer physikalischen Ziehdistanz des Fortschrittsbalkens und einer Fortschrittsanpassungsamplitude der Mediendatei, wobei die Fortschrittsanpassungsamplitude der Mediendatei, die einer physikalischen Einheits-Ziehdistanz des Fortschrittsbalkens während der ersten Handlung entspricht, größer ist als die Fortschrittsanpassungsamplitude der Mediendatei, die einer physikalischen Einheits-Ziehdistanz der Fortschrittsdatei während der zweiten Handlung entspricht.

4. Verfahren nach Anspruch 3, wobei das Bestimmen (104) des Wiedergabefortschrittspunkts der Mediendatei gemäß der Fortschrittsanpassungsregel und der vom Benutzer getätigten zweiten Handlung in Bezug auf den Fortschrittsbalken der Mediendatei Folgendes aufweist:
Erfassen (401) einer physikalischen Ziehdistanz des Fortschrittsbalkens, die der zweiten Handlung entspricht;
Berechnen (402) einer Mediendateianpassungsamplitude, die der zweiten Handlung entspricht, gemäß einer Proportion zwischen der physikalischen Einheits-Ziehdistanz des Fortschrittsbalkens und der Fortschrittsanpassungsamplitude der Mediendatei, die in der Fortschrittsanpassungsregel aufgezeichnet ist, und der physikalischen Einheits-Ziehdistanz des Fortschrittsbalkens, die der zweiten Handlung entspricht; und
Bestimmen (403) des Wiedergabefortschrittspunkts der Mediendatei gemäß der Mediendateianpassungsamplitude, die der zweiten Handlung entspricht, und eines Wiedergabefortschrittspunkts der Mediendatei vor der durch den Benutzer getätigten zweiten Handlung.

5. Verfahren nach einem der vorhergehenden Ansprüche, das ferner Folgendes aufweist:
wenn die erste Handlung die vorgegebene Handlungsbedingung erfüllt, vergrößertes Darstellen des Fortschrittsbalkens der Mediendatei innerhalb eines ersten Fortschrittsbereichs gemäß einem vorgegebenen Darstellungsparameter, wobei eine Beendigungsposition der ersten Handlung innerhalb des ersten Fortschrittsbereichs liegt.

6. Verfahren nach einem der vorhergehenden Ansprüche, das ferner Folgendes aufweist:
Empfangen einer durch den Benutzer eingegebenen Fortschrittsanpassungsregel-Modifizierungshandlung, wobei die Fortschrittsanpassungsregel-Modifizierungshandlung einen Modifikationsparameter zum Modifizieren wenigstens einer Wiedergabeanpassungsregel, die lokal in einem Endgerät gespeichert wird, durch den Benutzer trägt; und
Aktualisieren der Fortschrittsanpassungsregel, die lokal in dem Endgerät gespeichert wird, gemäß dem Modifikationsparameter.

7. Vorrichtung (1200) zum Anpassen des Wiedergabefortschritts einer Mediendatei, die Folgendes aufweist:
ein Erfassungsmodul (510), das zum Erfassen einer ersten, von einem Benutzer in Bezug auf einen Fortschrittsbalken der Mediendatei getätigten Handlung konfiguriert ist;
ein Urteilungsmodul (520), das zum Urteilen, ob die erste durch das Erfassungsmodul erfasste Handlung eine vorgegebene Handlungsbedingung erfüllt, konfiguriert ist, wobei das Urteilen das Bestimmen aufweist, ob die erste Handlung eine Handlung ist, bei der der Benutzer den Fortschrittsbalken zu einem ersten Punkt zieht und dann den Fortschrittsbalken langsam in der gleichen Richtung zieht, ohne den Fortschrittsbalken am ersten Punkt loszulassen;
ein erstes Bestimmungsmodul (530), das konfiguriert ist, um im Fall, dass das Urteilungsergebnis des Urteilungsmoduls (520) ja ist, eine Fortschrittsanpassungsregel, die der vorgegebenen Handlungsbedingung entspricht, zu bestimmen; und
ein zweites Bestimmungsmodul (540), das zum Bestimmen eines Wiedergabefortschrittspunkts der Mediendatei gemäß der durch das erste Bestimmungsmodul (530) bestimmten Fortschrittsanpassungsregel und einer durch den Benutzer getätigten zweiten Handlung in Bezug auf den Fortschrittsbalken der Mediendatei konfiguriert ist, wobei die zweite Handlung das Ziehen des Fortschrittsbalkens durch den Benutzer in der gleichen Richtung vom ersten Punkt zu einem zweiten Punkt aufweist;
ein erstes Handlungsempfangsmodul (710), das zum Empfangen einer durch den Benutzer eingegebenen Fortschrittsanpassungsregel-Einstellungshandlung konfiguriert ist, wobei die Fortschrittsanpassungsregel-Einstellungshandlung wenigstens eine durch den Benutzer angepasste Wiedergabeanpassungsregel trägt; und
ein Regelspeichermodul (720), das zum lokalen Einspeichern der durch den Benutzer angepassten Fortschrittsanpassungsregel in das Endgerät konfiguriert ist.

8. Vorrichtung nach Anspruch 7, wobei das erste Bestimmungsmodul (530) Folgendes aufweist:
ein Regelbestimmungsuntermodul (531), das zum Auswählen einer Fortschrittsanpassungsregel, die der vorgegebenen Handlungsbedingung entspricht, aus mehreren Fortschrittsanpassungsregeln, die lokal in einem Endgerät gespeichert werden, konfiguriert ist.

9. Vorrichtung nach Anspruch 7 oder Anspruch 8, wobei die Fortschrittsanpassungsregel Folgendes aufweist:
eine proportionale Beziehung zwischen einer physikalischen Ziehdistanz des Fortschrittsbalkens und einer Fortschrittsanpassungsamplitude der Mediendatei, wobei die Fortschrittsanpassungsamplitude der Mediendatei, die einer physikalischen Einheits-Ziehdistanz des Fortschrittsbalkens während der ersten Handlung entspricht, größer ist als die Fortschrittsanpassungsamplitude der Mediendatei, die einer physikalischen Einheits-Ziehdistanz der Fortschrittsdatei während der zweiten Handlung entspricht.

10. Vorrichtung nach einem der Ansprüche 7 bis 9, wobei das zweite Bestimmungsmodul (540) Folgendes aufweist:
ein Distanzerfassungsuntermodul (541), das zum Erfassen einer physikalischen Ziehdistanz des Fortschrittsbalkens, die der zweiten Handlung entspricht, konfiguriert ist;
ein Berechnungsuntermodul (542), das zum Berechnen einer Mediendateianpassungsamplitude, die der zweiten Handlung entspricht, gemäß einer Proportion zwischen der physikalischen Einheits-Ziehdistanz des Fortschrittsbalkens und der Fortschrittsanpassungsamplitude der Mediendatei, die in der Fortschrittsanpassungsregel aufgezeichnet ist, und der physikalischen Einheits-Ziehdistanz des Fortschrittsbalkens, die der zweiten Handlung entspricht, konfiguriert ist; und
ein Fortschrittspunktbestimmungsuntermodul (543), das zum Bestimmen (403) des Wiedergabefortschrittspunkts der Mediendatei gemäß der Mediendateianpassungsamplitude, die der zweiten Handlung entspricht, und eines Wiedergabefortschrittspunkts der Mediendatei vor der durch den Benutzer getätigten zweiten Handlung konfiguriert ist.

11. Vorrichtung nach einem der Ansprüche 7 bis 10, die ferner Folgendes aufweist:
ein Fortschrittsbalkendarstellungsmodul (610), das zum vergrößerten Darstellen des Fortschrittsbalkens der Mediendatei innerhalb eines ersten Fortschrittsbereichs gemäß einem vorgegebenen Darstellungsparameter, wenn das Urteilungsergebnis des Urteilungsmoduls ja ist, konfiguriert ist, wobei eine Beendigungsposition der ersten Handlung innerhalb des ersten Fortschrittsbereichs liegt.

12. Computerprogramm, das Anweisungen aufweist, die bei Ausführung durch einen Prozessor eines Endgeräts den Prozessor zum Durchführen eines Verfahrens nach einem der Ansprüche 1 bis 6 veranlassen.

## Revendications

1. Procédé de réglage de la progression de lecture d'un fichier multimédia, comprenant :
la réception d'une opération de définition de règle de réglage de progression entrée par l'utilisateur, l'opération de définition de règle de réglage de progression comportant au moins une règle de réglage de progression personnalisée par l'utilisateur ;
l'acquisition (101) d'une première opération réalisée par un utilisateur relativement à une barre de progression du fichier multimédia ;
le jugement (102) que la première opération satisfait ou non une condition d'opération prédéfinie, le jugement comprenant la détermination que la première opération est une opération par laquelle l'utilisateur fait glisser la barre de progression jusqu'à un premier point puis fait glisser lentement la barre de progression dans le même sens sans relâcher la barre de progression au niveau du premier point ;
quand la première opération satisfait la condition d'opération prédéfinie, la détermination (103) d'une règle de réglage de progression correspondant à la condition d'opération prédéfinie ; et
la détermination (104) d'un point de progression de lecture du fichier multimédia conformément à la règle de réglage de lecture et à une seconde opération réalisée par l'utilisateur relativement à la barre de progression du fichier multimédia, la seconde opération comprenant e glissement par l'utilisateur de la barre de progression dans le même sens du premier point à un second point.

2. Procédé selon la revendication 1, dans lequel la détermination (103) de la règle de réglage de progression correspondant à la condition d'opération prédéfinie comprend :
la sélection d'une règle de réglage de progression correspondant à la condition d'opération prédéfinie parmi une pluralité de règles de réglage de progression mémorisées localement dans un dispositif terminal.

3. Procédé selon la revendication 1, dans lequel la règle de réglage de progression comprend
une relation proportionnelle entre une distance de glissement physique de la barre de progression et une amplitude de réglage de progression du fichier multimédia, dans lequel l'amplitude de réglage de progression du fichier multimédia correspondant à une distance de glissement physique unitaire de la barre de progression durant la première opération est supérieure à l'amplitude de réglage de progression du fichier multimédia correspondant à une distance de glissement physique unitaire de la barre de progression durant la seconde opération.

4. Procédé selon la revendication 3, dans lequel la détermination (104) du point de progression de lecture du fichier multimédia conformément à la règle de réglage de progression et de la seconde opération réalisée par l'utilisateur respectivement à la barre de progression du fichier multimédia comprend :
l'acquisition (401) d'une distance de glissement physique de la barre de progression correspondant à la seconde opération ;
le calcul (402) d'une amplitude de réglage de fichier multimédia correspondant à la seconde opération conformément à une proportion entre la distance de glissement physique unitaire de la barre de progression et l'amplitude de réglage de progression du fichier multimédia enregistré dans la règle de réglage de progression et la distance de glissement physique de la barre de progression correspondant à la seconde opération ; et
la détermination (403) du point de progression de lecture du fichier multimédia conformément à la seconde opération et d'un point de progression de lecture du fichier multimédia avant la seconde opération réalisée par l'utilisateur.

5. Procédé selon n'importe quelle revendication précédente, comprenant en outre :
quand la première opération satisfait la condition d'opération prédéfinie, la présentation agrandie de la barre de progression du fichier multimédia dans une première plage de progression conformément à un paramètre de présentation prédéfini, dans lequel une position de terminaison de la première opération est située à l'intérieur de la première plage de progression.

6. Procédé selon n'importe quelle revendication précédente, comprenant en outre :
la réception d'une opération de modification de règle de réglage de progression entrée par l'utilisateur, l'opération de modification de règle de réglage de progression comportant un paramètre de modification pour la modification par l'utilisateur d'au moins une règle de réglage de progression mémorisée localement dans un dispositif terminal ; et
l'actualisation de la règle de réglage de progression mémorisée localement dans le dispositif terminal conformément au paramètre de modification.

7. Appareil (1200) de réglage de la progression de lecture d'un fichier multimédia, comprenant :
un module d'acquisition (510) configuré pour acquérir une première opération réalisée par un utilisateur relativement à une barre de progression du fichier multimédia ;
un module de jugement (520) configuré pour juger que la première opération acquise par le module d'acquisition satisfait ou non une condition d'opération prédéfinie, le jugement comprenant la détermination que la première opération est une opération par laquelle l'utilisateur fait glisser la barre de progression jusqu'à un premier point puis fait glisser lentement la barre de progression dans le même sens sans relâcher la barre de progression au niveau du premier point ;
un premier module de détermination (530) configuré pour, si le résultat du jugement du module de jugement (520) est oui, déterminer une règle de réglage de progression correspondant à la condition d'opération prédéfinie ; et
un second module de détermination (540) configuré pour déterminer un point de progression de lecture du fichier multimédia conformément à la règle de réglage de lecture déterminée par le premier module de détermination (530) et à une seconde opération réalisée par l'utilisateur relativement à la barre de progression du fichier multimédia, la seconde opération comprenant la glissement par l'utilisateur de la barre de progression dans le même sens du premier point à un second point ;
un premier module de réception d'opération (710) configuré pour recevoir une opération de définition de règle de réglage de progression entrée par l'utilisateur, dans lequel l'opération de définition de règle de réglage de progression comporte au moins une règle de réglage de progression personnalisée par l'utilisateur ; et
un module de mémorisation de règle (720) configuré pour mémoriser localement la règle de réglage de progression personnalisée par l'utilisateur dans un dispositif terminal.

8. Appareil selon la revendication 7, dans lequel le premier module de détermination (530) comprend :
un sous-module de détermination de règle (531) configuré pour sélectionner une règle de réglage de progression correspondant à la condition d'opération prédéfinie parmi une pluralité de règles de réglage de progression mémorisée localement dans un dispositif terminal.

9. Appareil selon la revendication 7 ou la revendication 8, dans lequel la règle de réglage de progression comprend :
une relation proportionnelle entre une distance de glissement physique de la barre de progression et une amplitude de réglage de progression du fichier multimédia, dans lequel l'amplitude de réglage de progression du fichier multimédia correspondant à une distance de glissement physique unitaire de la barre de progression durant la première opération est supérieure à l'amplitude de réglage de progression du fichier multimédia correspondant à une distance de glissement physique unitaire de la barre de progression durant la seconde opération.

10. Appareil selon l'une quelconque des revendications 7 à 9, dans lequel le second module de détermination (540) comprend :
un sous-module d'acquisition de distance (541) configuré pour acquérir une distance de glissement physique de la barre de progression correspondant à la seconde opération ;
un sous-module de calcul (542) configuré pour calculer une amplitude de réglage du fichier multimédia correspondant à la seconde opération conformément à une proportion entre la distance de glissement physique unitaire de la barre de progression et l'amplitude de réglage de progression du fichier multimédia enregistré dans la règle de réglage de progression et la distance de glissement physique de la barre de progression correspondant à la seconde opération ; et
un sous-module de détermination de point de progression (543) configuré pour déterminer le point de progression de lecture du fichier multimédia conformément à la seconde opération et un point de progression de lecture du fichier multimédia avant la seconde opération réalisée par l'utilisateur.

11. Appareil selon l'une quelconque des revendications 7 à 10, comprenant en outre :
un module de présentation de barre de progression (610) configuré pour, quand le résultat du jugement du module de jugement est oui, présenter de manière agrandie la barre de progression du fichier multimédia dans une première plage de progression conformément à un paramètre de présentation prédéfinie, dans lequel une position de terminaison de la première opération est située à l'intérieur de la première plage de progression.

12. Programme informatique comprenant des instructions qui, à leur exécution par un processeur d'un dispositif terminal, amènent le processeur à mettre en oeuvre un procédé selon l'une quelconque des revendications 1 à 6.
